# EUROPEAN PATENT APPLICATION

(11) **EP 3 896 595 A1**
(43) Date of publication of application: **20.10.2021**
(21) Application number: 21163876.2
(22) Date of filing: 22.03.2021
(51) Int. Cl.: G06F 40/284, G06F 40/289, G06F 40/258, G06N 3/02, G06F 16/34, G06F 40/30

(54) **TEXT KEY INFORMATION EXTRACTING METHOD, APPARATUS, ELECTRONIC DEVICE, STORAGE MEDIUM, AND COMPUTER PROGRAM PRODUCT**

(30) Priority: 17.04.2020 CN 202010305486
(71) Applicant: Beijing Baidu Netcom Science and Technology Co., Ltd., Beijing 100085 (CN)
(72) Inventor: WANG, Xin, Beijing, Beijing 100085 (CN); SUN, Mingming, Beijing, Beijing 100085 (CN); LI, Ping, Beijing, Beijing 100085 (CN)
(74) Representative: dompatent von Kreisler Selting Werner - Partnerschaft von Patent- und Rechtsanwälten mbB

(57) **Abstract**

The present disclosure provides a method for extracting key information of text, and apparatus, electronic device, storage medium, and computer program product thereof, which relates to the technical field of artificial intelligence. A specific implementation solution is as follows: segmenting an original text according to a preset segmenting unit, and generating a unit sequence corresponding to the original text; according to the unit sequence and a pre-trained information extraction model, extracting ID information of at least one target segment based on the original text by using a segment-copying principle; generating the key information based on the ID information of the at least one target segment. According to the technical solution of the present disclosure, it is possible to copy a segment including consecutive words as a target segment, effectively reduce copying times, reduce the accumulated errors, and thereby effectively improve the speed and accuracy in extracting the key information during extraction of the key information.

## Description

### Field of the Disclosure

The present disclosure relates to computer technologies, particularly to the technical field of artificial intelligence, and specifically to a method for extracting key information of text, and apparatus, electronic device and storage medium and computer program product thereof.

### Background of the Disclosure

Extracting of key information from a text means copying segments of the key information from the text and splicing the segments into the key information, and is widely applied in many natural language processing tasks. For example, in a task of automatically extracting an abstract from the text, the key information may be copied from the text as the abstract or a title. As another example, in an information-extracting task, entities and a text reflecting a relationship between the entities are precisely copied to achieve extraction. Hence, improving the precision in copying key information segments may improve the performance of an upper layer application task, thereby serving a final product.

Conventional extraction of key information from a text usually employs a "character/word-level copy" technique, i.e., words are copied one by one, and the accuracy of copying a word is also affected by the accuracy of copying a preceding word. Even though a segment composed of a plurality of continuous words is to be copied, the words in the segment need to be copied one by one.

However, according to the character/word-level copy solution in the above conventional key information extraction process, when the segment comprising a plurality of words is copied continuously, copy needs to be performed continuously for many times, and errors will be accumulated, so that the accuracy in extracting key information from the text is undesirable.

### Summary of the Disclosure

To address the above technical problems, the present disclosure provides a method for extracting key information of text, and apparatus, electronic device and storage medium thereof.

According to a first aspect, there is provided a method for extracting key information of text, comprising:
segmenting an original text according to a preset segmenting unit, and generating a unit sequence corresponding to the original text;
according to the unit sequence and a pre-trained information extraction model, extracting ID information of at least one target segment based on the original text by using a segment-copying principle;
generating the key information based on the ID information of the at least one target segment.

According to a second aspect, there is provided a method for training an information extraction model, comprising:
collecting several training texts and known key information extracted based on the training texts;
as for the several training texts, segmenting the training texts according to a preset segmenting unit, and generating a training unit sequence corresponding to the training texts; and marking a known probability distribution of training target segments included in the known key information;
training the information extraction model by using the training unit sequence of the training texts and the known probability distribution of training target segments.

According to a third aspect, there is provided an apparatus for extracting key information of text, comprising:
a segmentation processing module configured to segment an original text according to a preset segmenting unit, and generate a unit sequence corresponding to the original text;
an extraction processing module configured to, according to the unit sequence and a pre-trained information extraction model, extract ID information of at least one target segment based on the original text by using a segment-copying principle;
a generating module configured to generate the key information based on the ID information of the at least one target segment.

According to a fourth aspect, there is provided an apparatus for training an information extraction model, comprising:
a collecting module configured to collect several training texts and known key information extracted based on the training texts;
a generating module configured to, as for the several training texts, segment the training texts according to a preset segmenting unit, and generate a training unit sequence corresponding to the training texts; and mark a known probability distribution of training target segments included in the known key information;
a training module configured to train the information extraction model by using the training unit sequence of the training texts and the known probability distribution of training target segments.

In a fifth aspect, there is provided an electronic device, comprising:
at least one processor; and
a memory communicatively connected with the at least one processor; wherein,
the memory stores instructions executable by the at least one processor, and the instructions are executed by the at least one processor to enable the at least one processor to perform the above methods.

In a sixth aspect, there is provided a non-transitory computer-readable storage medium storing computer instructions therein, wherein the computer instructions are used to cause the computer to perform the above methods.

In a seventh aspect, there is provided a computer program product comprising instructions which, when the program is executed by a computer, cause the computer to perform the above method.

The technologies according to the present disclosure solve a problem about a poor accuracy of the character/word-level copying solution in the prior art. It is possible to copy a segment including consecutive words as a target segment, effectively reduce copying times, reduce the accumulated errors and thereby effectively improve the speed and accuracy in extracting the key information during extraction of the key information.

In addition, in the present disclosure, the information extraction model may be trained to become an end-to-end prediction model. When the unit sequence is input, the prediction model may directly predict a plurality of target segments corresponding to the key information, so that the key information may be generated based on the plurality of target segments. The use is very convenient. Furthermore, the trained information extraction model in the present embodiment implements copying based on segments, and the speed and accuracy of extracting the key information are both very high.

It is to be understood that the summary section is not intended to identify key or essential features of embodiments of the present disclosure, nor is it intended to be used to limit the scope of the present disclosure. Other features of the present disclosure will become easily comprehensible through the following description.

### Brief Description of Drawings

The figures are intended to facilitate understanding the solutions, not to limit the present disclosure. In the figures,
FIG. 1 illustrates a schematic diagram of a first embodiment of the present disclosure;
FIG. 2 illustrates a schematic diagram of a second embodiment of the present disclosure;
FIG. 3 illustrates a schematic diagram of a third embodiment of the present disclosure;
FIG. 4 illustrates a schematic diagram of a fourth embodiment of the present disclosure;
FIG. 5 illustrates a schematic diagram of a fifth embodiment of the present disclosure;
FIG. 6 illustrates a schematic diagram of a sixth embodiment of the present disclosure;
FIG. 7 illustrates a schematic diagram of a seventh embodiment of the present disclosure;
FIG. 8 illustrates a schematic diagram of an eighth embodiment of the present disclosure;
FIG. 9 illustrates a schematic diagram of a ninth embodiment of the present disclosure;
FIG. 10 illustrates a schematic diagram of a tenth embodiment of the present disclosure;
FIG. 11 illustrates a block diagram of an electronic device for implementing the above relevant methods according to embodiments of the present disclosure.

### Detailed Description of Preferred Embodiments

Exemplary embodiments of the present disclosure are described below with reference to the accompanying drawings, include various details of the embodiments of the present disclosure to facilitate understanding, and should be considered as being only exemplary. Therefore, those having ordinary skill in the art should recognize that various changes and modifications can be made to the embodiments described herein without departing from the scope and spirit of the application. Also, for the sake of clarity and conciseness, depictions of well-known functions and structures are omitted in the following description.

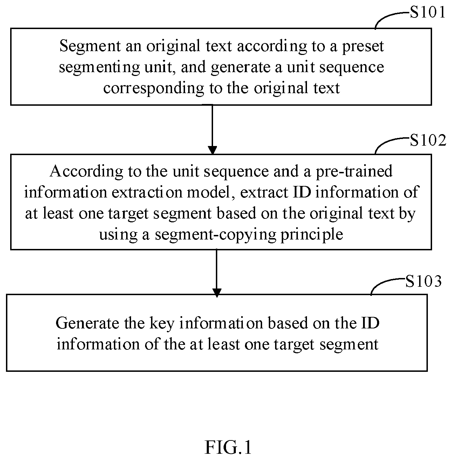

FIG. 1 illustrates a schematic diagram of a first embodiment of the present disclosure; as shown in FIG. 1, a method for extracting key information of text according to the present embodiment may specifically include the following steps:
S101: segmenting an original text according to a preset segmenting unit, and generating a unit sequence corresponding to the original text;
A subject for executing the method for extracting key information of text according to the present embodiment is an apparatus for extracting key information of text, which is used to extract key information based on the original text, e.g., extract the title or abstract of the original text as the key information.

Specifically, when the original text is segmented according to the preset segmenting unit in this step, the selected preset segmenting unit may be a word or character. If the original text is segmented according to character, the implementation is simpler, i.e., each character in the original text is taken as an independent unit for segmentation, and the units are arranged in a sequential order in the original text to obtain a unit sequence corresponding to the original text. If the original text is segmented according to word, reference may be specifically made to a relevant word segmentation policy. Upon word segmentation, each segmented word is taken as an independent segmentation unit, and the units after the segmentation are arranged in a sequential order in the original text to obtain a corresponding unit sequence. When the original text is segmented according to word in the present embodiment, each resultant unit may comprise one character or two or more characters.

S102: according to the unit sequence and a pre-trained information extraction model, extracting ID information of at least one target segment based on the original text by using a segment-copying principle;
Specifically, the unit sequence is input to the pre-trained information extraction model, the information extraction model may employ a segment-copying principle, and the ID information of at least one target segment is extracted based on the original text, according to the units in the original text provided in the unit sequence. The segment-copy principle is copying a text including more than two units at one time. For example, when the abstract is extracted, ten consecutive characters in the original text need to be extracted. If the conventional character-level extraction manner is employed, extraction needs to be performed ten times. According to the segment-copying principle in the present embodiment, the segment including the ten consecutive characters is copied at one time as a target segment when the key information is extracted. As compared with the prior art, the one-time operation may complete the copy of the segment including the ten consecutive characters. Based on the segment-copying principle, the information extraction model may refer to the unit sequence, and extract the ID information of the target segment which is for generating the key information and includes one unit or more than two consecutive units.

The ID information of the target segment of the present embodiment may be used to indicate a position or content of the target segment, e.g., the ID information of the target segment may take a form of the X^{th} to the Y^{th} units or the a^{th} to the b^{th} characters. Since the unit sequence is already formed, the positions of the units in the unit sequence are determined, and the corresponding segment can be accurately positioned based on the X^{th} to the Y^{th} units. In addition, after the unit sequence is determined, the number of characters included in each unit is also determined, so the corresponding segment can also accurately positioned based on the form of the a^{th} to the b^{th} characters.

If the target segment is an end indicator, the ID information of the target segment can also directly indicate the end indicator, whereupon the extraction of the target segment ends.

S103: generating the key information based on the ID information of the at least one target segment.

Specifically, the specific content corresponding to the target segment may be copied by referring to the original text based on the ID information of the at least one target segment. The target segments outputted by the information extraction model are spliced in a sequential output order to generate the key information.

By the method for extracting key information of text of the present embodiment, the original text is segmented according to the preset segmenting unit, and the unit sequence corresponding to the original text is generated; the ID information of at least one target segment is extracted based on the original text by using a segment-copying principle, according to the unit sequence and the pre-trained information extraction model; the key information is generated based on the ID information of the at least one target segment. As compared with the character/word-level copy solution in the prior art, the segment including consecutive words may be copied as one target segment, so that during extraction of the key information, the times of copying can be effectively reduced, the accumulated errors are reduced, and the speed and accuracy of key information extraction can be effectively improved.

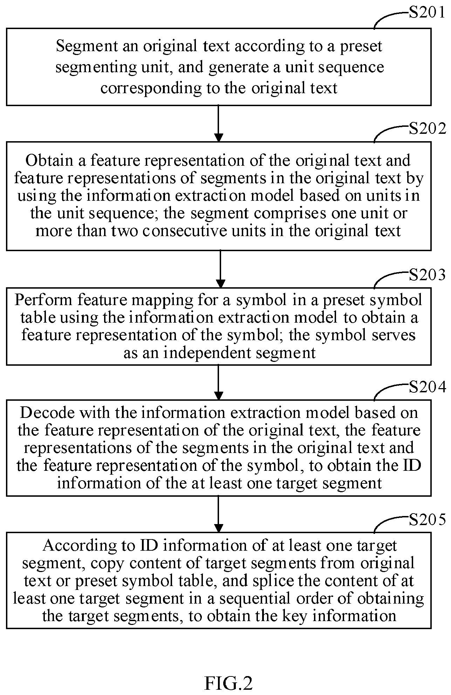

FIG. 2 illustrates a schematic diagram of a second embodiment of the present disclosure. As shown in FIG. 2, the technical solution of the method for extracting key information of text in the present embodiment is further introduced in more detail on the basis of the above technical solution of the embodiment shown in FIG. 1. As shown in FIG. 2, the method for extracting key information of text according to the present embodiment may specifically include the following steps:
S201: segmenting an original text according to a preset segmenting unit, and generating a unit sequence corresponding to the original text;
Reference may be made to the above step S101 in the embodiment shown in FIG. 1 for a specific implementation manner of the step, which will not be detailed any more here.

S202: obtaining a feature representation of the original text and feature representations of segments in the original text by using an information extraction model based on units in the unit sequence; wherein the segment comprises one unit or more than two consecutive units in the original text;

For example, the step may specifically include the following steps:
(a1) encoding the units in the unit sequence using an encoder in the information extraction model, to obtain feature representations of the units; and generating the feature representation of the original text based on the feature representation of the units;
   Specifically, reference may be made to a word-vector mapping representation for a process of obtaining the feature representations of the units, thereby converting the words into feature information that can be processed by a computer. The feature representations of the units obtained in the present embodiment may specifically employ a vector form. Specific vector dimensions may be set according to the requirements of the encoder in the information extraction model, for example, the encoding may be implemented using a Recurrent Neural Network (RNN).
   The feature representations of the units are used to identify the feature information of the units. The feature representation of the original text may be obtained by calculating according to the feature representations of the units in the original text. Reference may be made to a calculation manner of using parts to obtain a whole in the prior art. The feature representation of the original text may integrate the feature information characterizing the whole original text.
(b1) generating the feature representations of the segments in the original text by using a segment representation generator in the information extraction model, based on the feature representations of the units in the original text.

In the present embodiment, when the feature representations of the units in the original text are generated, the feature representations of all segments that might be included in the original text need to be generated. For example, the unit sequence of the original text includes [unit 1, unit 2, ..., unit N], and corresponding to possible segments, there are unit 1-1, unit 1-2, unit 1-3, ..., unit 1-N, unit 2-2, unit 2-3, ..., unit 2-N, ..., unit N-N, where unit 1-1 means a segment including unit 1 only, unit 1-2 means a segment including unit 1 and unit 2, and so on so forth. When the unit sequence of the original text is determined, the corresponding segments are also determined.

In this step, the feature representations of the segments need to be generated based on the feature representations of the units. Specifically, the whole feature representation of the segment may be obtained according to the feature representations of the units of the segment. In practical application, there are many methods of using parts to obtain a whole, including but not limited to start-end unit splicing representation, start-end unit operation (e.g., subtraction) representation, a representation that all units in the segment are encoded by an encoder, etc. Preferably, to reduce the influence from rare, non-standard, wrong text in the segment, the feature representation of the segment may be generated based on the feature representations of the start and end units of the segment, thereby effectively improving the accuracy of the feature representation of the segment.

S203: performing feature mapping for a symbol in a preset symbol table using the information extraction model to obtain a feature representation of the symbol, wherein the symbol serves as an independent segment;
In practical application, during information extraction, a placeholder or other symbol might need to be generated. Hence, a symbol table may be preset, and some symbols are set in the symbol table to participate in the extraction process of the target segment. For example, an end indicator may be set. In the process of extracting the target segment of the key information, if the end indicator is extracted, this indicates that the extraction of the target segment ends. Alternatively, some placeholders for use in the key information may also be set in the symbol table.

To unify the symbol and the segment, many methods may be used to abstract the symbol as a feature representation in the same space as the segment, to achieve unification processing of the segment and the symbol.

For example, specifically a symbol feature mapper in the information extraction model may be used to perform feature mapping for the symbol in the preset symbol table, to obtain the feature representation of the symbol.

S204: decoding with the information extraction model based on the feature representation of the original text, the feature representations of the segments in the original text and the feature representation of the symbol, to obtain the ID information of the at least one target segment;
In the present embodiment, upon decoding, each symbol and each segment included in the original text respectively are regarded as an independent candidate segment. During decoding, the ID information that may serve as the target segment is predicted from the segments in the original text and symbols. For example, the step may specifically include the following steps:
(a2) scoring the segments respectively, by taking the feature representation of the original text as an initial hidden layer state and by using a decoder in the information extraction model according to the hidden layer state, the feature representations of the segments and the feature representations of the symbols; and obtaining ID information of a segment with the highest score, as the ID information of the target segment.
   For example, upon decoding in a first step, it is possible to perform operation for the initial hidden layer state and a feature representation of a start identifier, refer to the feature representations of all the candidate segments, namely, the feature representations of the segments in the original text and symbols serving as independent segments, and thereby obtain probabilities of the segments as the target segment. This process is a scoring process. The higher the probability is, the larger the possibility that the segment is regarded as the target segment is. There is a probability value for each segment, as the score result of the segment. Then, the ID information of a segment with a maximum probability value may be obtained, as the ID information of the target segment. A specific operation manner depends on the employed network structure. Different network structures correspond to different operation manners.
(b2) updating the hidden layer state with the decoder based on the feature representation of the target segment obtained by the decoding in the preceding step; scoring the segments and symbols respectively again, according to the updated hidden layer state, the feature representations of the segments and the feature representations of the symbols; and obtaining ID information of next target segment with the highest score; performing in the same way until the end indicator is obtained or the number of characters of all target segments are obtained or a preset character number threshold is achieved, to obtain the ID information of the at least one target segment.

A decoding principle in the present embodiment is: the ID information of a target segment may be obtained upon performing the decoding with the initial hidden layer state and the start indicator in the first step. Then, upon decoding in other steps, the feature representation of the target segment obtained in the decoding in the preceding step is obtained first, and then operation is performed for the feature representation of the target segment obtained in the decoding in the preceding step and the hidden layer state, to update the hidden layer state. Then, operation is performed for the updated hidden layer state respectively with the feature representations of the candidate segments, namely, the feature representations of the segments in the original text and the feature represents of the symbols, to obtain the probabilities of the candidate segments as the target segment, and obtain the ID information of the segment with the maximum probability value as the ID information of the target segment. Work is performed in the same way until the end indicator is obtained or the number of characters of all target segments are obtained or a preset character number threshold is achieved, to obtain the ID information of all target segments.

The obtaining the ID information of the target segment is a cyclic step. Since the number of characters included in the key information is limited, the target segment cannot be always extracted cyclically without limitation. If the end indicator is obtained, this indicates that the obtainment of the ID information of the target segment ends, whereupon the key information may be generated based on the already-obtained ID information of the at least one target sheet. However, if the end indicator is not yet obtained, a sum of the number of characters of all target segments may be set as a termination condition. If the sum of the number of characters of all target segments reaches a preset character number threshold, further obtainment of the ID information of the target segment is stopped.

The preset character number threshold may depend on the key information to be extracted. For example, if the key information is a title, the present character number threshold may be set to a small number, e.g., less than or equal to 25. If the key information is an abstract, the preset character number threshold may be set to a larger number, e.g., less than or equal to 300.

In the present embodiment, the process of obtaining the ID information of the target segment is described by taking an example of obtaining processing results of portions in the information extraction model by sectioning the model and getting into the model. The encoder, the segment representation generator, the symbol feature mapper and the decoder in the information extraction model of the present embodiment are all constituted by a neural network.

S205: according to the ID information of the at least one target segment, copying the content of the target segments from the original text or the preset symbol table, and splicing the content of the at least one target segment in a sequential order of obtaining the target segments, to obtain the key information.

In the present embodiment, the information extraction model might extract some placeholders in the symbol table as the target segments, whereupon corresponding symbols need to be copied from the symbol table to participate in the splicing to obtain the key information. However, if the symbol is an end indicator, the end indicator is used to identify the end of the key information, whereupon the symbol of the end indicator needn't be copied.

It should be appreciated that the step S205 is performed jointly with the above step S204. Once the ID information of one target set is obtained in step S204, the copying operation is performed once time in step S205. Alternatively, it is possible that after the ID information of all target segments is obtained in step S204, the copying of the respective target segments is performed in turn based on the ID information of the target segments in step S205.

According to the method for extracting key information of text of the present embodiment, the feature representation of the original text and feature representations of segments in the original text are obtained by using the information extraction model based on units in the unit sequence; feature mapping is performed for a symbol in a preset symbol table using the information extraction model to obtain a feature representation of the symbol; decoding is performed with the information extraction model based on the feature representation of the original text, the feature representations of the segments in the original text and the feature representations of the symbols, to obtain the ID information of the at least one target segment. According to the method, it is possible to effectively ensure the accuracy of the obtained target segment, and thereby effectively ensure the accuracy of the extracted key information.

Furthermore, regarding the character/word-level copying in the prior art, the encoding efficiency will be reduced upon encoding rare, non-standard and wrong text in the text, and the accuracy is poor upon copying. In contrast, in the present embodiment, the content of the target segments may be copied from the original text or the preset symbol table according to the obtained ID information of the at least one target segment. That is to say, it is possible to, only according to the boundary of the segments, implement the copy of the content of the segments, reduce the influence on the accuracy of the extracted key information exerted by rare, non-standard, wrong text in the segment, and thereby effectively improve the accuracy of extracting the key information.

With the technical solution of the present embodiment being employed, it is only necessary to perform an operation of "selecting a segment" several times when the key information is extracted, instead of performing an operation of "selection a character or word" tens of times in the character/word-level copy. It is possible to effectively reduce the number of decoding steps of the decoder network and reduce the accumulated errors, thereby effectively quickening the speed of obtaining the key information, and improving the precision of the extracted key information. Furthermore, according to the technical solution of the present embodiment, since copying is achieved in a segment manner, the requirement for standardization of the original text is lower, and the method for extracting key information of text has a very strong applicability.

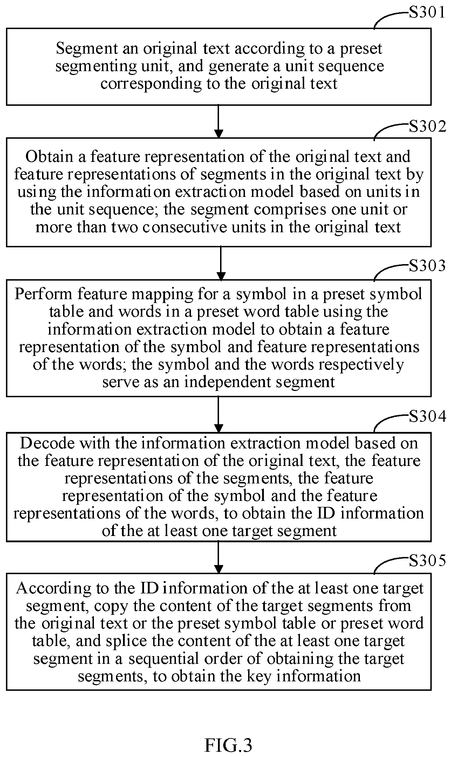

FIG. 3 illustrates a schematic diagram of a third embodiment of the present disclosure. As shown in FIG. 3, the technical solution of the method for extracting key information of text in the present embodiment is further introduced in more detail on the basis of the above technical solution of the embodiment shown in FIG. 1. As shown in FIG. 3, the method for extracting key information of text according to the present embodiment may specifically include the following steps:
S301: segmenting an original text according to a preset segmenting unit, and generating a unit sequence corresponding to the original text;
S302: obtaining a feature representation of the original text and feature representations of segments in the original text by using an information extraction model based on units in the unit sequence; wherein the segment comprises one unit or more than two consecutive units in the original text;
S303: performing feature mapping for a symbol in a preset symbol table and words in a preset word table using the information extraction model to obtain a feature representation of the symbol and feature representations of the words; the symbol and the words respectively serve as an independent segment;
S304: decoding with the information extraction model based on the feature representation of the original text, the feature representations of the segments, the feature representation of the symbol and the feature representations of the words, to obtain the ID information of the at least one target segment;
S305: according to the ID information of the at least one target segment, copying the content of the target segments from the original text or the preset symbol table or preset word table, and splicing the content of the at least one target segment in a sequential order of obtaining the target segments, to obtain the key information.

The present embodiment differs from the embodiment shown in FIG. 2 in that in the present embodiment, feature representations of words in the preset table are introduced upon decoding, and each word also serves as an independent candidate segment, so that each word might serve as a target segment upon decoding in step S304. The feature mapping for the words in the preset word table may be implemented using the encoder in the information extraction model, in the same way as the way of obtaining feature representations of all units in the original text. The steps in the present embodiment are implemented in the same way as the embodiment shown in FIG. 2. For details, please refer to the disclosure of the embodiment shown in FIG. 2.

In practical application, during extraction of the key information, copy usually does not stand individually, and instead, needs to combine with the "generation of characters/words that do not exist in the input original text", i.e., copy needs to combine with the generation effectively. For example, in the generation of the abstract, characters/words that do not exist in the original text might need to be used to summarize some information. Therefore, during information extraction, not only the symbols in the preset symbol table are used, but also the words in the preset word table are needed. For example, if the original text is " 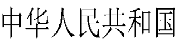 (the People's Republic of China)", " 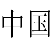 (China)" may be set in the preset word table for summarization. Alternatively, some words having the same or similar meaning as words in the original text may be set in the preset word table, and can be used in the key information more properly.

According to the method for extracting key information of text in the present embodiment, the preset word list is introduced so that the words in the preset word table may also serve as target segments during key information extraction, and participate in the generation of the key information such that the key information extracting process uses the copying manner as well as the generation manner, and the accuracy in generating the key information can be further improved effectively.

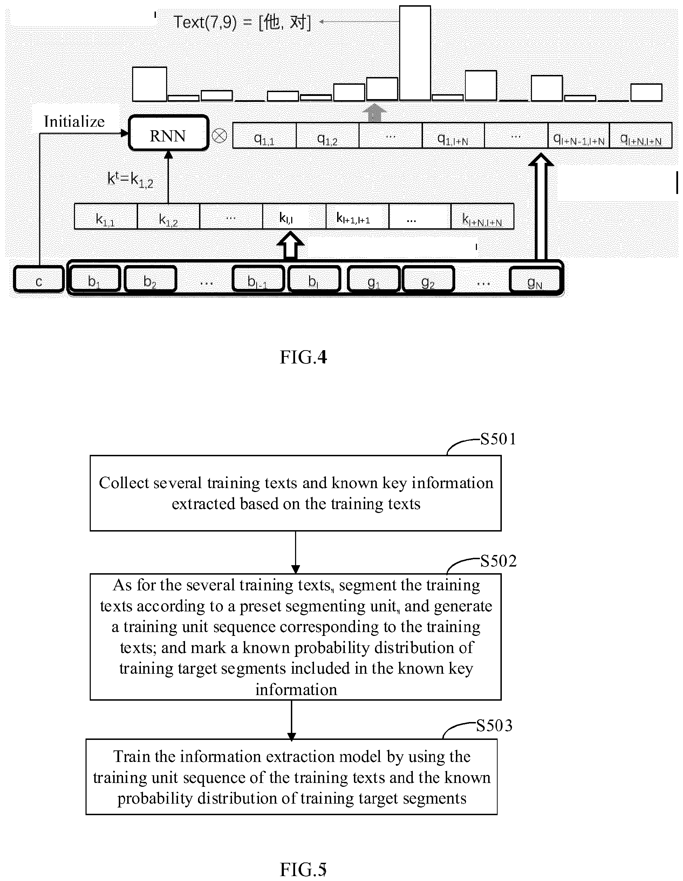

FIG. 4 illustrates a schematic diagram of a fourth embodiment of the present disclosure; as shown in FIG. 4, the working principle of the information extraction model is introduced with reference to the method for extracting key information of text in the embodiments shown in FIG. 1 through FIG. 3. In FIG. 4, an example is taken in which the original text includes one unit, where b₁, b₂, ..., bₗ₋₁, bₗ mean that the encoder in the information extraction model encodes the units in the unit sequence corresponding to the original text to obtain the feature representations of the units, c is the feature representation of the original text obtained based on the feature representations of the units, the feature representations being used for initializing the hidden layer state of the decoder. g₁, g₂, ..., g_{N} are feature representations obtained by performing feature mapping for the symbols in the preset symbol table and the words in the preset word list.

The segments of all candidates may be obtained based on the units of the original text, the symbols and the words, where the units of the original text may individually form a segment, the adjacent units in the original text may also form a segment together, and all segments of the original text may be obtained in a similar manner. The symbols and words all individually serve as a segment. A segment ID generator in the information extraction model may be obtained by calculating by using the feature representations of the start unit and the end unit based on the feature representations of the segments of the original text. For example, k_{1,1} in FIG. 4 is a segment independently constituted by the first unit, k_{1,2} is a segment formed by the first unit and the second unit, and likewise, there may be k_{1,3}, ..., k_{1,1}, k_{2,2}, k_{2,3}, ..., k_{2,1}, ...k_{1,1}. The feature representations of all segments in the original text may be obtained in a segment-forming manner. In addition, a symbol feature mapper in the information extraction model may be used to perform feature mapping for the symbols. The encoder may also be used to encode the words in the preset word table to obtain corresponding feature representations, thereby obtaining the feature representations of all candidate segments. As shown in FIG. 4, k_{1+1,1+1}, ..., k_{1+N,1+N} represent the feature representations of N symbols and words each independently serving as a segment.

As shown in FIG. 4, the decoder uses a recurrent neural network, which may predict the ID information of the target segment using the step S403 shown in the above FIG. 3 based on the feature representations of the initialized original text and the feature representations of the segments. As shown in FIG. 4, an example is taken in which the predicted ID information of the target segment is Text (7,9)= [ 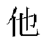 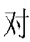 ], i.e., the target segment is from the 7^{th} character to the 9^{th} character in the original text, wherein the 7^{th} character is " 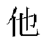 ", and the 9^{th} character is " 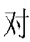 ". As such, content information between the 7^{th} character " 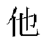 " and the 9^{th} character " 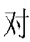 " may be copied from the original text based on the ID information of the target segment. The content of the segment may be obtained in turn in a similar manner, and the content be spliced in turn in the segment-obtaining order, to obtain the key information extracted based on the original text.

FIG. 5 illustrates a schematic diagram of a fifth embodiment of the present disclosure; as shown in FIG. 5, a method for training an information extraction model according to the present embodiment may specifically include:
S501: collecting several training texts and known key information extracted based on the training texts;
The known key information extracted based on the training texts in the present embodiment may be manually extracted.

S502: as for the several training texts, segmenting the training texts according to a preset segmenting unit, and generating a training unit sequence corresponding to the training texts; and marking a known probability distribution of training target segments included in the known key information;
Reference may be made to the process of generating the unit sequence in the embodiment shown in FIG. 1 for a process of generating the training unit sequence of the present embodiment, which will not be detailed any more here.

S503: training the information extraction model by using the training unit sequence of the training texts and the known probability distribution of a plurality of training target segments.

A subject for performing the method of training the information extraction model in the present embodiment is an apparatus of training the information extraction model. The apparatus may be an electronic device as an entity, or may be integrated using software and running on a computer device when used, to train the information extraction model.

Based on the content described above, it may be believed that each piece of training data in the present embodiment may correspondingly include a training unit sequence of one training text and a known probability distribution of the plurality of training target segments in the known key information. The known probability distribution of the training segments, as supervisory data, implements adjustment of the parameters of the information extraction model to train the model.

According to the method for training an information extraction model in the present embodiment, several training texts and known key information extracted based on the training texts are collected; as for the several training texts, the training texts are segmented according to the preset segmenting unit, and the training unit sequence corresponding to the training texts is generated; and the known probability distribution of training target segments included in the known key information is marked; the information extraction model is trained by using the training unit sequence of the training texts and the known probability distribution of the plurality of training target segments. In the above way, the trained information extraction model may be made an end-to-end prediction model. When the unit sequence is input, the prediction model may directly predict a plurality of target segments corresponding to the key information, so that the key information may be generated based on the plurality of target segments. The use is very convenient. Furthermore, the trained information extraction model in the present embodiment implements copying based on segments, and the speed and accuracy of extracting the key information are both very high.

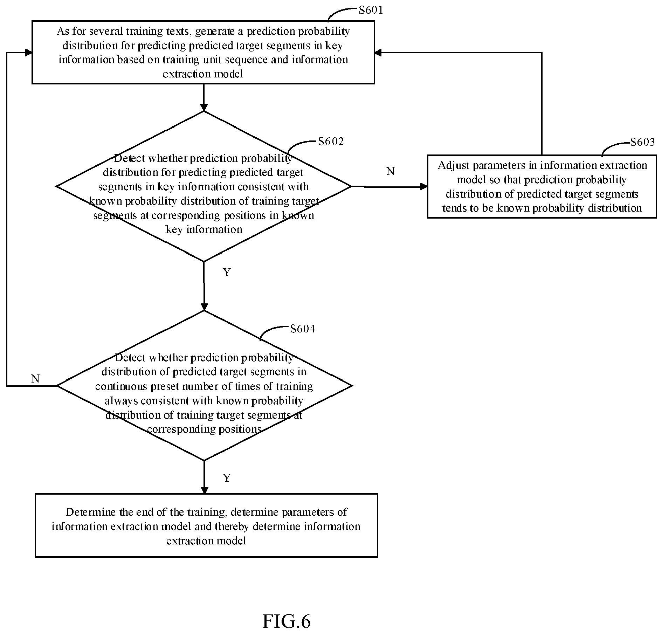

FIG. 6 illustrates a schematic diagram of a sixth embodiment of the present disclosure. FIG. 6 shows the method for training an information extraction model according to the present embodiment. A specific implementation manner of step S503 training the information extraction model by using the training unit sequence of the training texts and the known probability distribution of a plurality of training target segments is further described in more detail on the basis of the technical solution of the embodiment shown in FIG. 5. As shown in FIG. 6, the training method may specifically include:
S601: as for the several training texts, generating a prediction probability distribution for predicting predicted target segments in the key information based on the training unit sequence and the information extraction model;
A process of generating the prediction probability distribution of the predicted target segments in the key information in the present embodiment is similar to the principle of obtaining the ID information of the at least one target segment in the embodiments shown in FIG. 2 and FIG. 3. Reference may be made to the above relevant depictions for details.

For example, the step S601 may specifically include the following steps:
(a3) as for the several training texts, obtaining feature representations of the training texts and feature representations of the segments in the training texts by using the information extraction model based on the units in the training unit sequence; the segments comprising one unit or more than two consecutive units in the training texts.
   For example, as for the several training texts, the encoder in the information extraction model may be used to encode the units in the training unit sequence, to obtain the feature representations of the units; and generate the feature representations of the training texts base on the feature representations of the units; the segment representation generator in the information extraction model may be used to generate the feature representations of the segments in the training texts based on the feature representations of the units in the training texts.
(b3) performing feature mapping for a symbol in the preset symbol table by using the information extraction model, to obtain a feature representation of the symbol, wherein the symbol serves as an independent segment;
(c3) decoding with the information extraction model based on the feature representations of the training texts, the feature representations of the segments and the feature representation of the symbol, to obtain a prediction probability distribution for predicting predicted target segments in the key information.

For example, when a first predicted target segment in the key information is decoded for prediction, the decoder is used to perform decoding by taking the feature representations of the training texts as an initial hidden layer state to obtain a probability that the segments become the predicted target segments; and generate a prediction probability distribution for predicting the first predicted target segment in the key information, based on the probabilities of the segments;

When other predicted target segments other than the first predicted target segment in the key information are decoded for prediction, the encoder is used to perform feature mapping for a previous predicted target segment obtained by decoding, to obtain a corresponding feature representation; the decoder is used to update the hidden layer state based on the feature representation of the previous predicted target segment; and continue to decode based on the updated hidden layer state, to obtain a prediction probability distribution for predicting other predicted target segments in the key information.

It should be further appreciated that when a preset word table may be provided in the present embodiment, the words in the preset word table may be taken as independent candidate segments in the information extraction model, to achieve the function of considering the generated words while copying during extraction of the key information. At this time, correspondingly the above step (b3) may be extended to: performing feature mapping for the symbols in the preset symbol table and words in the preset word table by using the information extraction model, to obtain the feature representations of the symbols and the feature representations of the words; the symbols and words respectively serve as an independent segment.

Correspondingly, the above step (c3) may be extended as decoding with the information extraction model based on the feature representations of the training texts, the feature representations of the segments, the feature representation of the symbol and the feature representations of the words, to obtain a prediction probability distribution for predicting predicted target segments in the key information.

The step S601 of the present embodiment differs from the process of obtaining the ID information of at least one target segment in the embodiments shown in FIG. 2 and FIG. 3 as follows: through the pertinent steps of the embodiments shown in FIG. 2 and FIG. 3, what is obtained directly with respect to the training texts is the ID information of the target segment, and the ID information of the target segment is selecting the segment with a maximum probability as the target segment based on the probability of scoring all candidate segments. In contrast, in the present embodiment, the segment with a maximum probability needn't be selected. Upon decoding in a manner similar to the manner in the embodiment shown in FIG. 2 or FIG. 3, the prediction probability distribution of the current predicted target segment is generated directly based on the probabilities of all candidate segments. For example, in the embodiments shown in FIG. 2 and FIG. 3, assuming that there are totally N segments, after scoring, the probability of the first segment is 0.01, the probability of the second segment is 0.005, ..., the probability of the i^{th} segment is 0.7, ..., the probability of the N^{th} segment is 0.2. In the manner stated in the embodiments shown in FIG. 2 and FIG. 3, the i^{th} segment is directly selected as the target segment, and the ID information of the target segment is output. In the present embodiment, what is obtained through this step is the prediction probability distribution of the predicted target segment, for example represented as [0.01,0.005, ..., 0.7, ..., 0.2] . The remaining implementation principles are the same in the present embodiment and the embodiments shown in FIG. 2 and FIG. 3, and will not be detailed any more here.

S602: detecting whether the prediction probability distribution for predicting the predicted target segments in the key information is consistent with a known probability distribution of the training target segments at corresponding positions in the known key information; performing step S603 if YES; otherwise performing step S604;

In the present embodiment, the known probability distribution of the training target segments in the known key information may be marked by the apparatus for training the information extraction model, and verified manually. Since the training target segments not only might be the segments in the original text, but also might be symbols in the symbol table or certain words in the preset word table, reference may be made to all the candidate segments in the training texts, all candidate symbols in the symbol table and all words in the preset word table upon marking, wherein each symbol and each word all serve as a segment independently, and the probability distribution of the training target segments may be marked. Furthermore, upon marking, the number of dimensions of the marked known probability distribution corresponds to the total number of candidate segments, and each dimension corresponds to one segment. The probability at the position corresponding to the training target segment is 1, and the probability at remaining positions is 0. For example, regarding the probability distribution of the end indicator, the probability only at a position corresponding to the end indicator is 1, and the probability at remaining positions is 0.

It should be appreciated that in practical application, if the target segment is only obtained from the original text, it is feasible to remove a corresponding portion of candidates without referring to the preset word table or symbol table.

That is to say, in the present embodiment, the known probability distribution of the training target segments in the known key information may be marked by only referring to the units in the training unit sequence of the training texts, whereupon the training target segments comprise one unit or more than two consecutive units in the training unit sequence. Alternatively, the known probability distribution of the training target segments in the known key information may be marked by only referring to the units in the training unit sequence of the training texts and the symbol table, whereupon the training target segments not only comprise one unit or more than two consecutive units in the training unit sequence, but also comprise the symbols in the symbol table. Alternatively, the known probability distribution of the training target segments in the known key information may be marked by simultaneously referring to the units in the training unit sequence of the training texts, the symbol table and the preset word table, whereupon the training target segments not only comprise one unit or more than two consecutive units in the training unit sequence, but also comprise the symbols in the symbol table, but also comprise the words in the preset word table.

S603: adjusting parameters in the information extraction model so that the prediction probability distribution of the predicted target segments tends to be the known probability distribution; returning to step S601 to continue to predict next predicted target segment until after the end indicator is predicted, continuing to use pertinent information of next training text to train.

In the present embodiment, when the information extraction model predicts each predicted target segment, it needs to be compared with the known probability distribution of known training target segments at the position in the known key information. As long as they are not consistent with each other, the parameters of the network structure of the information extraction model needs to be adjusted so that the prediction probability distribution tends to be the known probability distribution.

S604: detecting whether the prediction probability distribution of predicted target segments in a continuous preset number of times of training is always consistent with the known probability distribution of the training target segments at corresponding positions; if YES, determining the end of the training, determining parameters of the information extraction model and thereby determining the information extraction model; if it is not consistent, returning to step S601 to continue to train the information extraction model using the training texts.

This step is a cutoff condition of the training of the information extraction model. The continuous preset number of times of training may be set according to actual needs, for example, 50 continuous times, 80 continuous times, 100 continuous times or other continuous times of training. Alternatively, in practical application, the cutoff condition of the training may be set as ending the training after preset threshold times of training are completed. The preset times here may be set to 1 million or other number according to actual needs, which will not be detailed any more here.

According to the method for training an information extraction model of the present embodiment, it is possible to, through the above technical solution, implement the training of the capability of predicting the target segment based on a segment-copying principle, effectively ensure the accuracy and the speed of obtaining the ID information of the target segment obtained by the information extraction model obtained by training, and thereby effectively improve the speed and accuracy of extracting the key information.

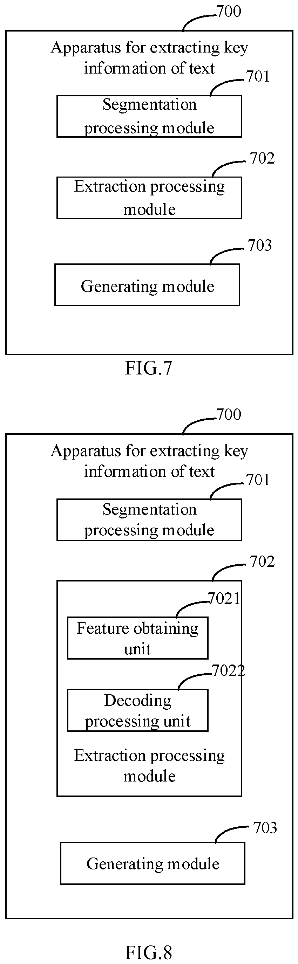

FIG. 7 illustrates a schematic diagram of a seventh embodiment of the present disclosure. As shown in FIG. 7, an apparatus 700 for extracting key information of text according to the present embodiment comprises:
a segmentation processing module 701 configured to segment an original text according to a preset segmenting unit, and generate a unit sequence corresponding to the original text;
an extraction processing module 702 configured to, according to the unit sequence and a pre-trained information extraction model, extract ID information of at least one target segment based on the original text by using a segment-copying principle;
a generating module 703 configured to generate the key information based on the ID information of the at least one target segment.

Principles employed by the apparatus 700 for extracting key information of text of the present embodiment to implement the extraction of the key information of text by using the above modules and the resultant technical effects are the same as those of the above relevant method embodiments. For particulars, please refer to the depictions of the aforesaid relevant method embodiments, and no detailed depictions will be presented here.

FIG. 8 illustrates a schematic diagram of an eighth embodiment of the present disclosure. As shown in FIG. 8, the technical solution of the present disclosure will be described below in more detail by describing the apparatus 700 for extracting key information of text of the present embodiment on the basis of the embodiment shown in FIG. 7.

As shown in FIG. 8, in the apparatus 700 for extracting key information of text of the present embodiment, the extraction processing module 702 comprises:
a feature obtaining unit 7021 configured to obtain a feature representation of the original text and feature representations of segments in the original text by using the information extraction model based on units in the unit sequence; wherein the segment comprises one unit or more than two consecutive units in the original text;
the feature obtaining unit 7021 further configured to perform feature mapping for a symbol in a preset symbol table using the information extraction model to obtain a feature representation of the symbol, wherein the symbol serves as an independent segment;
a decoding processing unit 7022 configured to decode with the information extraction model based on the feature representation of the original text, the feature representations of the segments in the original text and the feature representation of the symbol, to obtain the ID information of the at least one target segment.

Further optionally, the feature obtaining unit 7021 is configured to:
encode the units in the unit sequence using an encoder in the information extraction model, to obtain feature representations of the units;
generate the feature representation of the original text based on the feature representation of the units;
generate the feature representations of the segments in the original text by using a segment representation generator in the information extraction model, based on the feature representations of the units in the original text.

Further optionally, the feature obtaining unit 7021 is further configured to:
use a symbol feature mapper in the information extraction model to perform feature mapping for the preset symbol, to obtain the feature representation of the symbol.

Further optionally, the decoding processing unit 7022 is configured to:
score the segments respectively, by taking the feature representation of the original text as an initial hidden layer state and by using a decoder in the information extraction model according to the hidden layer state, the feature representations of the segments and the feature representations of the symbols; and obtain information of a segment with the highest score, as the ID information of the target segment;
update the hidden layer state with the decoder based on the feature representation of the target segment obtained by the decoding in the preceding step; score the segments and symbols respectively again, according to the updated hidden layer state, the feature representations of the segments and the feature representations of the symbols; and obtain ID information of next target segment with the highest score; perform in the same way until an end indicator is obtained or the number of characters of all target segments are obtained or a preset character number threshold is achieved, to obtain the ID information of the at least one target segment.

Alternatively, further optionally, the feature obtaining unit 7021 is configured to perform feature mapping for a preset symbol and words in a preset word table using the information extraction model to obtain a feature representation of the symbol and feature representations of the words; the symbol and the words respectively serve as an independent segment;

Correspondingly, the decoding processing unit 7022 is configured to decode with the information extraction model based on the feature representation of the original text, the feature representations of the segments, the feature representation of the symbol and the feature representations of the words, to obtain the ID information of the at least one target segment;

Principles employed by the apparatus 700 for extracting key information of text of the present embodiment to implement the extraction of the key information of text by using the above modules and the resultant technical effects are the same as those of the above relevant method embodiments. For particulars, please refer to the depictions of the aforesaid relevant method embodiments, and no detailed depictions will be presented here.

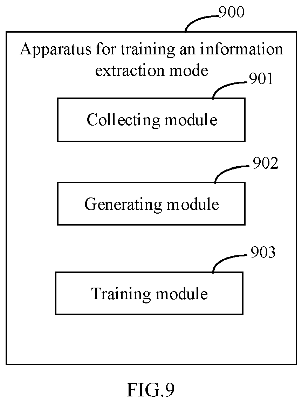

FIG. 9 illustrates a schematic diagram of a ninth embodiment of the present disclosure. As shown in FIG. 9, an apparatus 900 for training an information extraction model according to the present embodiment comprises:
a collecting module 901 configured to collect several training texts and known key information extracted based on the training texts;
a generating module 902 configured to, as for the several training texts, segment the training texts according to a preset segmenting unit, and generate a training unit sequence corresponding to the training texts; and mark a known probability distribution of training target segments included in the known key information;
a training module 903 configured to train the information extraction model by using the training unit sequence of the training texts and the known probability distribution of training target segments.

Principles employed by the apparatus 900 for training an information extraction model of the present embodiment to implement the training of the information extraction model by using the above modules and the resultant technical effects are the same as those of the above relevant method embodiments. For particulars, please refer to the depictions of the aforesaid relevant method embodiments, and no detailed depictions will be presented here.

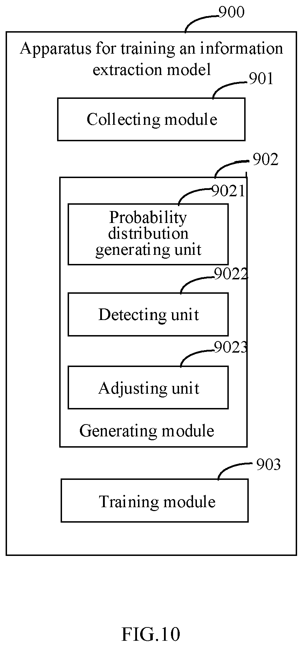

FIG. 10 illustrates a schematic diagram of a tenth embodiment of the present disclosure. As shown in FIG. 10, the technical solution of the present disclosure will be described below in more detail by describing the apparatus 900 for training an information extraction model of the present embodiment on the basis of the embodiment shown in FIG. 9.

As shown in FIG. 10, in the apparatus 900 for training an information extraction model of the present embodiment, the training module 903 comprises:
a probability distribution generating unit 9031 configured to, as for the several training texts, generate a prediction probability distribution for predicting predicted target segments in the key information based on the training unit sequence and the information extraction model;
a detecting unit 9032 configured to detect whether the prediction probability distribution for predicting the predicted target segments in the key information is consistent with a known probability distribution of the training target segments at corresponding positions in the known key information;
an adjusting unit 9033 configured to adjust parameters in the information extraction model if it is not consistent so that the prediction probability distribution of the predicted target segments tends to be the known probability distribution.

Further optionally, the probability distribution generating unit 9031 is configured to:
as for the several training texts, obtain feature representations of the training texts and feature representations of the segments in the training texts by using the information extraction model based on the units in the training unit sequence; the segments comprising one unit or more than two consecutive units in the training texts;
perform feature mapping for a symbol in the preset symbol table by using the information extraction model, to obtain a feature representation of the symbol, wherein the symbol serves as an independent segment;
decode with the information extraction model based on the feature representations of the training texts, the feature representations of the segments and the feature representation of the symbol, to obtain a prediction probability distribution for predicting predicted target segments in the key information.

Further optionally, the probability distribution generating unit 9031 is configured to:
as for the several training texts, use an encoder in the information extraction model to encode the units in the training unit sequence, to obtain the feature representations of the units;
generate the feature representations of the training texts base on the feature representations of the units;
a segment representation generator in the information extraction model is used to generate the feature representations of the segments in the training texts based on the feature representations of the units in the training texts.

Further optionally, the probability distribution generating unit 9031 is configured to:
when a first predicted target segment in the key information is decoded for prediction, use a decoder to perform decoding by taking the feature representations of the training texts as an initial hidden layer state to obtain a probability that the segments become the predicted target segments; and generate a prediction probability distribution for predicting the first predicted target segment in the key information, based on the probabilities of the segments;
when other predicted target segments other than the first predicted target segment in the key information are decoded for prediction, use an encoder to perform feature mapping for a previous predicted target segment obtained by decoding, to obtain a corresponding feature representation; use the decoder to update the hidden layer state based on the feature representation of the previous predicted target segment; and continue to decode based on the updated hidden layer state, to obtain a prediction probability distribution for predicting other predicted target segments in the key information.

Alternatively, optionally, the probability distribution generating unit 9031 is configured to:
as for the several training texts, obtain feature representations of the training texts and feature representations of the segments in the training texts by using the information extraction model based on the units in the training unit sequence; the segments comprising one unit or more than two consecutive units in the training texts;
perform feature mapping for the preset symbols and words in the preset word table by using the information extraction model, to obtain the feature representations of the symbols and the feature representations of the words; the symbols and words respectively serve as an independent segment;
decode with the information extraction model based on the feature representations of the training texts, the feature representations of the segments, the feature representation of the symbols and the feature representations of the words, to obtain a prediction probability distribution for predicting predicted target segments in the key information.

Principles employed by the apparatus 900 for training an information extraction model of the present embodiment to implement the training of the information extraction model by using the above modules and the resultant technical effects are the same as those of the above relevant method embodiments. For particulars, please refer to the depictions of the aforesaid relevant method embodiments, and no detailed depictions will be presented here.

According to embodiments of the present disclosure, the present disclosure further provides an electronic device and a readable storage medium.

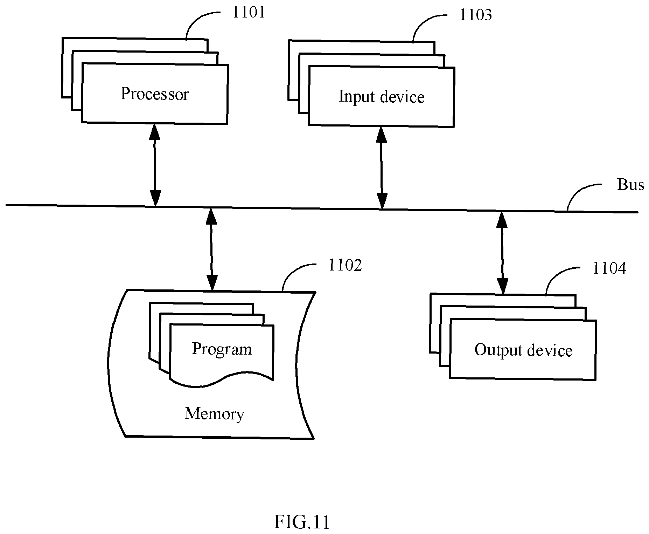

As shown in FIG. 11, it shows a block diagram of an electronic device for implementing the above methods according to embodiments of the present disclosure. The electronic device is intended to represent various forms of digital computers, such as laptops, desktops, workstations, personal digital assistants, servers, blade servers, mainframes, and other appropriate computers. The electronic device is further intended to represent various forms of mobile devices, such as personal digital assistants, cellular telephones, smartphones, wearable devices and other similar computing devices. The components shown here, their connections and relationships, and their functions, are meant to be exemplary only, and are not meant to limit implementations of the inventions described and/or claimed in the text here.

As shown in FIG. 11, the electronic device comprises: one or more processors 1101, a memory 1102, and interfaces configured to connect components and including a high-speed interface and a low speed interface. Each of the components are interconnected using various busses, and may be mounted on a common motherboard or in other manners as appropriate. The processor can process instructions for execution within the electronic device, including instructions stored in or on the memory to display graphical information for a GUI on an external input/output device, such as a display device coupled to the interface. In other implementations, multiple processors and/or multiple buses may be used, as appropriate, along with multiple memories and types of memory. Also, multiple electronic devices may be connected, with each device providing portions of the necessary operations (e.g., as a server bank, a group of blade servers, or a multi-processor system). One processor 1101 is taken as an example in FIG. 11.

The memory 1102 is a non-transitory computer-readable storage medium provided by the present disclosure. The memory stores instructions executable by at least one processor, so that the at least one processor executes the method for extracting key information of text or the method for training an information extraction model according to the present disclosure. The non-transitory computer-readable storage medium of the present disclosure stores computer instructions, which are used to cause a computer to execute the method for extracting key information of text or the method for training an information extraction model according to the present disclosure.

The memory 1102 is a non-transitory computer-readable storage medium and can be used to store non-transitory software programs, non-transitory computer executable programs and modules, such as program instructions/modules (e.g., relevant modules shown in FIG. 7 through FIG. 10) corresponding to the method for extracting key information of text or the method for training an information extraction model in embodiments of the present disclosure. The processor 1101 executes various functional applications and data processing of the server, i.e., implements the method for extracting key information of text or the method for training an information extraction model in the above method embodiments, by running the non-transitory software programs, instructions and modules stored in the memory 1102.

The memory 1102 may include a storage program region and a storage data region, wherein the storage program region may store an operating system and an application program needed by at least one function; the storage data region may store data created by the use of the electronic device for implementing the method for extracting key information of text or the method for training an information extraction model. In addition, the memory 1102 may include a high-speed random access memory, and may also include a non-transitory memory, such as at least one magnetic disk storage device, a flash memory device, or other non-transitory solid-state storage device. In some embodiments, the memory 1102 may optionally include a memory remotely arranged relative to the processor 1101, and these remote memories may be connected to the electronic device for implementing the method for extracting key information of text or the method for training an information extraction model through a network. Examples of the above network include, but are not limited to, the Internet, an intranet, a local area network, a mobile communication network, and combinations thereof.

The electronic device for implementing the method for extracting key information of text or the method for training an information extraction model may further include an input device 1103 and an output device 1104. The processor 1101, the memory 1102, the input device 1103 and the output device 1104 may be connected through a bus or in other manners. In FIG. 11, the connection through the bus is taken as an example.

The input device 1103 may receive inputted numeric or character information and generate key signal inputs related to user settings and function control of the electronic device for implementing the method for extracting key information of text or the method for training an information extraction model, and may be an input device such as a touch screen, keypad, mouse, trackpad, touchpad, pointing stick, one or more mouse buttons, trackball and joystick. The output device 1104 may include a display device, an auxiliary lighting device (e.g., an LED), a haptic feedback device (for example, a vibration motor), etc. The display device may include but not limited to a Liquid Crystal Display (LCD), a Light Emitting Diode (LED) display, and a plasma display. In some embodiments, the display device may be a touch screen.

Various implementations of the systems and techniques described here may be realized in digital electronic circuitry, integrated circuitry, specially designed ASICs (Application Specific Integrated Circuits), computer hardware, firmware, software, and/or combinations thereof. These various implementations may include implementation in one or more computer programs that are executable and/or interpretable on a programmable system including at least one programmable processor, which may be special or general purpose, coupled to receive data and instructions from, and to send data and instructions to, a storage system, at least one input device, and at least one output device.

These computer programs (also known as programs, software, software applications or code) include machine instructions for a programmable processor, and may be implemented in a high-level procedural and/or object-oriented programming language, and/or in assembly/machine language. As used herein, the terms "machine-readable medium" and "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here may be implemented on a computer having a display device (e.g., a CRT (cathode ray tube) or LCD (liquid crystal display) monitor) for displaying information to the user and a keyboard and a pointing device (e.g., a mouse or a trackball) by which the user may provide input to the computer. Other kinds of devices may be used to provide for interaction with a user as well; for example, feedback provided to the user may be any form of sensory feedback (e.g., visual feedback, auditory feedback, or tactile feedback); and input from the user may be received in any form, including acoustic, speech, or tactile input.

The systems and techniques described here may be implemented in a computing system that includes a back end component (e.g., as a data server), or that includes a middleware component (e.g., an application server), or that includes a front end component (e.g., a client computer having a graphical user interface or a Web browser through which a user may interact with an implementation of the systems and techniques described here), or any combination of such back end, middleware, or front end components. The components of the system may be interconnected by any form or medium of digital data communication (e.g., a communication network). Examples of communication networks include a local area network ("LAN"), a wide area network ("WAN"), and the Internet.

The computing system may include clients and servers. A client and server are generally remote from each other and typically interact through a communication network. The relationship of client and server arises by virtue of computer programs running on the respective computers and having a client-server relationship to each other.

According to technical solutions of embodiments of the present disclosure, the original text is segmented according to the preset segmenting unit, and the unit sequence corresponding to the original text is generated; the ID information of at least one target segment is extracted based on the original text by using a segment-copying principle, according to the unit sequence and the pre-trained information extraction model; the key information is generated based on the ID information of the at least one target segment. As compared with the word-level copy solution in the prior art, the segment including consecutive words may be copied as one target segment, so that during extraction of the key information, the times of copying can be effectively reduced, the accumulated errors are reduced, and the speed and accuracy of key information extraction can be effectively improved.

According to technical solutions of embodiments of the present disclosure, several training texts and known key information extracted based on the training texts are collected; as for the several training texts, the training texts are segmented according to the preset segmenting unit, and the training unit sequence corresponding to the training texts is generated; and the known probability distribution of training target segments included in the known key information is marked; the information extraction model is trained by using the training unit sequence of the training texts and the known probability distribution of the plurality of training target segments. In the above way, the trained information extraction model may be made an end-to-end prediction model. When the unit sequence is input, the prediction model may directly predict a plurality of target segments corresponding to the key information, so that the key information may be generated based on the plurality of target segments. The use is very convenient. Furthermore, the trained information extraction model in the present embodiment implements copying based on segments, and the speed and accuracy of extracting the key information are both very high.

It should be understood that the various forms of processes shown above can be used to reorder, add, or delete steps. For example, the steps described in the present disclosure can be performed in parallel, sequentially, or in different orders as long as the desired results of the technical solutions disclosed in the present disclosure can be achieved, which is not limited herein.

The foregoing specific implementations do not constitute a limitation on the protection scope of the present disclosure. It should be understood by those skilled in the art that various modifications, combinations, sub-combinations and substitutions can be made according to design requirements and other factors. Any modification, equivalent replacement and improvement made within the spirit and principle of the present disclosure shall be included in the protection scope of the present disclosure.

## Claims

1. A method for extracting key information of text, wherein the method comprises:
segmenting (S101) an original text according to a preset segmenting unit, and generating a unit sequence corresponding to the original text;
according to the unit sequence and a pre-trained information extraction model, extracting (S102) ID information of at least one target segment based on the original text by using a segment-copying principle;
generating (S103) the key information based on the ID information of the at least one target segment.

2. The method according to claim 1, wherein the step of, according to the unit sequence and a pre-trained information extraction model, extracting ID information of at least one target segment based on the original text by using a segment-copying principle comprises:
obtaining a feature representation of the original text and feature representations of segments in the original text by using the information extraction model based on units in the unit sequence; the segment comprises one unit or more than two consecutive units in the original text;
performing feature mapping for a symbol in a preset symbol table using the information extraction model to obtain a feature representation of the symbol; the symbol serves as an independent segment;
decoding with the information extraction model based on the feature representation of the original text, the feature representations of the segments in the original text and the feature representation of the symbol, to obtain the ID information of the at least one target segment.

3. The method according to claim 2, wherein the obtaining a feature representation of the original text and feature representations of segments in the original text by using the information extraction model based on units in the unit sequence comprises:
encoding the units in the unit sequence using an encoder in the information extraction model, to obtain feature representations of the units;
generating the feature representation of the original text based on the feature representations of the units;
generating the feature representations of the segments in the original text by using a segment representation generator in the information extraction model, based on the feature representations of the units in the original text.

4. The method according to claim 2 or 3, wherein the decoding with the information extraction model based on the feature representation of the original text, the feature representations of the segments and the feature representation of the symbol, to obtain the ID information of the at least one target segment comprises:
scoring the segments respectively, by taking the feature representation of the original text as an initial hidden layer state and by using a decoder in the information extraction model according to the hidden layer state, the feature representations of the segments and the feature representations of the symbols; and obtaining information of a segment with the highest score, as the ID information of the target segment;
updating the hidden layer state with the decoder based on the feature representation of the target segment obtained by the decoding in the preceding step; scoring the segments and symbols respectively again, according to the updated hidden layer state, the feature representations of the segments and the feature representations of the symbols; and obtaining ID information of next target segment with the highest score; performing in the same way until an end indicator is obtained or the number of characters of all target segments are obtained or a preset character number threshold is achieved, to obtain the ID information of the at least one target segment.

5. The method according to claim 1, wherein the step of, according to the unit sequence and a pre-trained information extraction model, extracting ID information of at least one target segment based on the original text by using a segment-copying principle comprises:
obtaining a feature representation of the original text and feature representations of segments in the original text by using the information extraction model based on units in the unit sequence; the segment comprises one unit or more than two consecutive units in the original text;
performing feature mapping for a preset symbol and words in a preset word table using the information extraction model to obtain a feature representation of the symbol and feature representations of the words; the symbol and the words respectively serve as an independent segment;
decoding with the information extraction model based on the feature representation of the original text, the feature representations of the segments, the feature representation of the symbol and the feature representations of the words, to obtain the ID information of the at least one target segment;

6. A method for training an information extraction model, wherein the method comprises:
collecting (S501) several training texts and known key information extracted based on the training texts;
as for the several training texts, segmenting (S502) the training texts according to a preset segmenting unit, and generating (S502) a training unit sequence corresponding to the training texts; and marking (S502) a known probability distribution of training target segments included in the known key information;
training (S503) the information extraction model by using the training unit sequence of the training texts and the known probability distribution of training target segments.

7. The method according to claim 6, wherein the training the information extraction model by using the training unit sequence of the training texts and the known probability distribution of training target segments comprises:
as for the several training texts, generating a prediction probability distribution for predicting predicted target segments in the key information based on the training unit sequence and the information extraction model;
detecting whether the prediction probability distribution for predicting the predicted target segments in the key information is consistent with a known probability distribution of the training target segments at corresponding positions in the known key information;
adjusting parameters in the information extraction model if it is not consistent so that the prediction probability distribution of the predicted target segments tends to be the known probability distribution.

8. The method according to claim 7, wherein the step of, as for the several training texts, generating a prediction probability distribution for predicting predicted target segments in the key information based on the training unit sequence and the information extraction model comprises:
as for the several training texts, obtaining feature representations of the training texts and feature representations of the segments in the training texts by using the information extraction model based on the units in the training unit sequence; the segments comprising one unit or more than two consecutive units in the training texts;
performing feature mapping for a symbol in the preset symbol table by using the information extraction model, to obtain a feature representation of the symbol; the symbol serves as an independent segment;
decoding with the information extraction model based on the feature representations of the training texts, the feature representations of the segments and the feature representation of the symbol, to obtain a prediction probability distribution for predicting predicted target segments in the key information.

9. The method according to claim 8, wherein the decoding with the information extraction model based on the feature representations of the training texts, the feature representations of the segments and the feature representation of the symbol, to obtain a prediction probability distribution for predicting predicted target segments in the key information comprises:
when a first predicted target segment in the key information is decoded for prediction, using the decoder to perform decoding by taking the feature representations of the training texts as an initial hidden layer state to obtain a probability that the segments become the predicted target segments; and generating a prediction probability distribution for predicting the first predicted target segment in the key information, based on the probabilities of the segments;
when other predicted target segments other than the first predicted target segment in the key information are decoded for prediction, using the encoder to perform feature mapping for a previous predicted target segment obtained by decoding, to obtain a corresponding feature representation; using the decoder to update the hidden layer state based on the feature representation of the previous predicted target segment; and continuing to decode based on the updated hidden layer state, to obtain a prediction probability distribution for predicting other predicted target segments in the key information.

10. The method according to claim 7, wherein the step of, as for the several training texts, generating a prediction probability distribution for predicting predicted target segments in the key information based on the training unit sequence and the information extraction model comprises:
as for the several training texts, obtaining feature representations of the training texts and feature representations of the segments in the training texts by using the information extraction model based on the units in the training unit sequence; the segments comprising one unit or more than two consecutive units in the training texts;
performing feature mapping for preset symbols and words in a preset word table by using the information extraction model, to obtain the feature representations of the symbols and the feature representations of the words; the symbols and words respectively serve as an independent segment;
decoding with the information extraction model based on the feature representations of the training texts, the feature representations of the segments, the feature representation of the symbols and the feature representations of the words, to obtain a prediction probability distribution for predicting predicted target segments in the key information.

11. An apparatus (700) for extracting key information of text, wherein the apparatus comprises:
a segmentation processing module (701) configured to segment an original text according to a preset segmenting unit, and generate a unit sequence corresponding to the original text;
an extraction processing module (702) configured to, according to the unit sequence and a pre-trained information extraction model, extract ID information of at least one target segment based on the original text by using a segment-copying principle;
a generating module (703) configured to generate the key information based on the ID information of the at least one target segment.

12. An apparatus (900) for training an information extraction model, wherein the apparatus comprises:
a collecting module (901) configured to collect several training texts and known key information extracted based on the training texts;
a generating module (902) configured to, as for the several training texts, segment the training texts according to a preset segmenting unit, and generate a training unit sequence corresponding to the training texts; and mark a known probability distribution of training target segments included in the known key information;
a training module (903) configured to train the information extraction model by using the training unit sequence of the training texts and the known probability distribution of training target segments.

13. An electronic device, wherein the electronic device comprises:
at least one processor; and
a memory communicatively connected with the at least one processor; wherein,
the memory stores instructions executable by the at least one processor, and the instructions are executed by the at least one processor to cause the at least one processor to perform the method according to any of claims 1-5 or 6-10.

14. A non-transitory computer-readable storage medium storing computer instructions therein, wherein the computer instructions are used to cause the computer to perform the method according to any of claims 1-5 or 6-10.

15. A computer program product comprising instructions which, when the program is executed by a computer, cause the computer to perform the method according to any of claims 1 to 5 or 6 to 10.
